(19) Europäisches Patentamt
European Patent Office
Office européen des brevets

(11) **EP 3 775 595 B1**

(12) **FASCICULE DE BREVET EUROPEEN**

(45) Date de publication et mention
de la délivrance du brevet:
**31.08.2022 Bulletin 2022/35**

(21) Numéro de dépôt: **19720774.9**

(22) Date de dépôt: **05.04.2019**

(51) Classification Internationale des Brevets (IPC):
***F16D 48/06*** (2006.01)

(52) Classification Coopérative des Brevets (CPC):
**F16D 48/06;** F16D 2500/10412; F16D 2500/1066;
F16D 2500/1117; F16D 2500/30421;
F16D 2500/3067; F16D 2500/3068;
F16D 2500/30816; F16D 2500/3144;
F16D 2500/5085; F16D 2500/702;
F16D 2500/70235; F16D 2500/70252;
F16D 2500/7041

(86) Numéro de dépôt international:
**PCT/EP2019/058699**

(87) Numéro de publication internationale:
**WO 2019/193180 (10.10.2019 Gazette 2019/41)**

(54) **PROCEDE DE CONTROLE D'UN EMBRAYAGE PILOTE**

VERFAHREN ZUR STEUERUNG EINER AUTOMATISCHEN KUPPLUNG

METHOD FOR CONTROLLING AN AUTOMATIC CLUTCH

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.04.2018 FR 1853028**

(43) Date de publication de la demande:
**17.02.2021 Bulletin 2021/07**

(73) Titulaire: **Valeo Systèmes de Contrôle Moteur
95892 Cergy Pontoise Cedex (FR)**

(72) Inventeur: **ARNAIZ, Lionel
95892 CERGY PONTOISE (FR)**

(56) Documents cités:
**DE-A1-102016 218 289      FR-A1- 2 802 482
FR-A1- 2 927 964      FR-A3- 2 947 878**

**Description**

Le domaine de la présente invention concerne la commande d'un organe de couplage piloté, notamment dans l'application de ces organes de couplage dans des véhicules hybrides ou conventionnels.

Lorsque le conducteur, par l'intermédiaire de la pédale d'accélérateur par exemple, génère une demande de couple moteur positive alors que la chaîne de traction, et donc l'organe de couplage agencé entre le moteur et l'arbre primaire, est ouverte, un organe de couplage piloté doit être commandé pour gérer phase de resynchronisation des régimes du moteur et de l'arbre primaire. Un arbre primaire est un arbre d'entrée d'une boîte de vitesses.

Une telle commande de l'organe de couplage à la suite d'une demande de couple moteur positive peut être nécessaire dans plusieurs situations de conduite où la chaîne de traction est ouverte, et par exemple sur un véhicule conventionnel lorsqu'une stratégie de mise en roue libre, connue également sous l'appellation anglaise de « coasting » et lors de laquelle la chaine de traction s'ouvre dès que le conducteur relève le pied, est implémentée, ou bien par exemple sur un véhicule hybride, lors d'une transition depuis le fonctionnement électrique vers le fonctionnement thermique.

D'autres situations peuvent encore être identifiées, sans que la liste qui en résulte soit pour autant exhaustive. Par exemple, dans certaines applications à des véhicules équipés de deux pédales, notamment dans le cas d'absence de pédale d'embrayage, des situations peuvent se produire au cours desquelles il peut être nécessaire de resynchroniser le régime de l'arbre moteur et le régime de l'arbre de boite, notamment lorsque le conducteur appuie à nouveau sur l'accélérateur, quels que soient la vitesse et le rapport engagé, suite à un changement de vitesse ou suite à une phase de roue libre.

Il importe pour le conducteur que cette commande de l'organe de couplage soit la plus transparente possible, c'est-à-dire que la stratégie associée à cette commande offre un bon agrément de conduite et permette de maitriser la durée de glissement avant la synchronisation des régimes.

Une première stratégie de pilotage peut être de faire une régulation du régime moteur à fournir en fonction de la consigne de couple moteur du conducteur et de piloter simultanément l'embrayage en fonction de cette valeur régulée et donc en fonction de la consigne de couple moteur du conducteur.

Une deuxième stratégie de pilotage peut être de laisser le régime moteur suivre librement la consigne de couple moteur du conducteur et de piloter l'embrayage en fonction de la valeur du régime moteur.

Le document FR2920501 décrit un procédé de contrôle d'embrayage piloté selon cette deuxième stratégie de pilotage et dans lequel la commande de l'embrayage est déterminée en fonction du régime moteur résultant de la consigne de couple moteur du conducteur à travers son actionnement de la pédale d'accélérateur. Un premier inconvénient du procédé de contrôle d'embrayage de ce document est qu'il vise à agir pendant les phases de décollage du véhicule, alors que d'autres situations, telles qu'on a pu le préciser précédemment, peuvent nécessiter une stratégie de commande appropriée de l'embrayage piloté. Par ailleurs, un deuxième inconvénient du procédé de contrôle d'embrayage de ce document est que dans les phases de fonctionnement autres que la phase de décollage, il pourrait y avoir des phases de glissement anormalement longues parce qu'il n'y a pas de garantie de convergence du régime moteur et du régime d'arbre primaire de boite de vitesses.

Le document DE102016218289 A1 décrit un procédé de redémarrage d'un moteur utilisant un embrayage.

Le document FR2927964 A1 présente un procédé de coordination moteur et embrayage sur un groupe motopropulseur à boîte de vitesses pilotée.

Le document FR2802482 A1 présente un procédé de régulation d'un processus de démarrage pour véhicule automobile, le procédé comprenant la détermination de couples pour un embrayage.

L'invention s'inscrit dans ce contexte et vise à proposer un procédé de contrôle d'un embrayage piloté au cours duquel une consigne de couple moteur est basée sur une demande de couple du conducteur et au cours duquel on régule l'embrayage en fonction de la variation de régime moteur qui en découle, et au cours duquel on ne commence à engager l'embrayage qu'après que le régime moteur présente une valeur supérieure à celle d'un régime d'arbre primaire ou supérieure à une valeur seuil prédéterminée.

On vise ainsi à ne pas aller trop vite dans la fermeture de l'embrayage piloté, et d'éviter les à-coups. L'objectif de l'invention est de, sans qu'il soit nécessaire de prévoir un estimateur à paramétrer, limiter le glissement lors de l'engagement de l'embrayage et de faire converger les régimes moteurs et arbre primaire. L'invention permet également de respecter la demande de couple du conducteur dans la phase de glissement.

Le couple moteur doit être ici compris comme le couple dû à la combustion. Il est utilisé pour accélérer l'inertie moteur et/ou transmettre un couple à la boite de vitesses à travers l'embrayage. Par exemple si l'embrayage est ouvert, le couple moteur se traduit en une accélération du moteur.

L'invention est définie par les revendications ajoutées. Selon l'invention, le procédé de contrôle comporte au moins :

- une première phase au cours de laquelle l'embrayage est maintenu ouvert et au cours de laquelle le régime moteur est amené à une valeur supérieure à celle du régime de l'arbre primaire ou à une valeur seuil ;
- une deuxième phase qui démarre dès que la valeur du régime moteur est au moins égale à la valeur du régime d'arbre primaire ou à la valeur seuil prédéterminée, au cours de laquelle une consigne de couple d'embrayage est déterminée en fonction du régime moteur et d'une consigne de régime, la consigne de régime prenant la valeur du régime moteur au début de cette deuxième phase ; et
- la consigne de régime est maintenue constante pendant toute la durée de la deuxième phase.

On comprend que la première phase peut être nulle si le véhicule est dans une phase de décollage, la valeur de régime moteur étant au moins égale à la valeur nulle du régime d'arbre primaire.

On pourra prévoir que :

- la consigne de régime est abaissée dans une première partie de la deuxième phase pour prendre une valeur inférieure à celle de la consigne de régime au début de la deuxième phase ; de la sorte, on facilite la convergence entre les deux régimes, le but étant de limiter la durée du glissement à l'engagement de l'embrayage, et donc de diminuer l'énergie dissipée et l'usure des organes de couplage ; en conséquence, on réduit la durée de la deuxième phase ;

- la consigne de régime est abaissée moins fortement au fur et à mesure que les valeurs du régime moteur et du régime d'arbre primaire se rapprochent ; de la sorte, on vise à réduire au maximum la variation de couple à la roue ressentie par le conducteur au moment où le régime d'arbre primaire et le régime moteur se synchronisent ;

- la consigne de régime peut être variable selon la situation du véhicule, et par exemple selon le rapport de vitesses engagé et la vitesse du véhicule ; l'évolution à la baisse de la consigne de régime peut être plus ou moins forte en fonction de la situation du véhicule ;

- la consigne de couple d'embrayage est déterminée par l'intermédiaire d'une cartographie ; à titre d'exemple, la cartographie pourra consister à déterminer la consigne de couple d'embrayage en fonction de deux variables que sont le régime moteur et la consigne de régime ;

- la consigne de couple d'embrayage est déterminée par l'intermédiaire d'un régulateur, prenant en entrée l'écart entre le régime moteur et la consigne de régime ;

- le régulateur permettant de déterminer la consigne de couple d'embrayage est un régulateur proportionnel ;

- le régulateur est paramétré de sorte que :

$$C_{emb\_cons} = K * (N_{mot} - N_{set\ point})$$

avec :

$C_{emb\_cons}$=la consigne de couple d'embrayage,
K = un gain,
$N_{mot}$ : le régime moteur,
$N_{set\ point}$ : la consigne de régime.

- la consigne de couple moteur est atténuée par rapport à la demande de couple du conducteur ;

- la consigne de couple moteur est atténuée en fonction du cas d'utilisation du véhicule ;

- au cours de la première phase, la consigne de couple moteur est établie à partir d'un régulateur ;

- la deuxième phase est suivie d'une troisième phase lorsque la valeur de régime d'arbre primaire est égale à celle du régime moteur ;

- au cours de la troisième phase, au moins la consigne de couple d'embrayage est modifiée pour prendre une valeur de consigne de couple d'embrayage dite valeur de couple d'embrayage fermé ;

- la valeur de consigne de couple d'embrayage est amenée à la valeur de couple d'embrayage fermé par l'intermédiaire d'une rampe, initialisée par la valeur de la consigne de couple d'embrayage au moment du passage de la deuxième phase à la troisième phase ;

- au cours de la troisième phase, la consigne de couple moteur est en outre amenée vers une valeur dite valeur de couple demandé par le conducteur ;

- la consigne de couple moteur est augmentée au cours de la troisième phase dès lors que la consigne de couple d'embrayage présente une valeur strictement supérieure à celle de la consigne de couple moteur ;

- la consigne de couple moteur est augmentée selon une rampe en s'assurant de maintenir la marge de sécurité entre consigne de couple moteur et consigne de couple d'embrayage. L'objectif est d'éviter un glissement pendant la troisième phase, l'absence de glissement étant obtenue en s'assurant que la consigne de couple embrayage est strictement supérieure, avec une marge déterminée, à la consigne de couple moteur.

D'autres détails, caractéristiques et avantages ressortiront plus clairement à la lecture de la description détaillée donnée ci-après à titre indicatif en relation avec les figures suivantes :

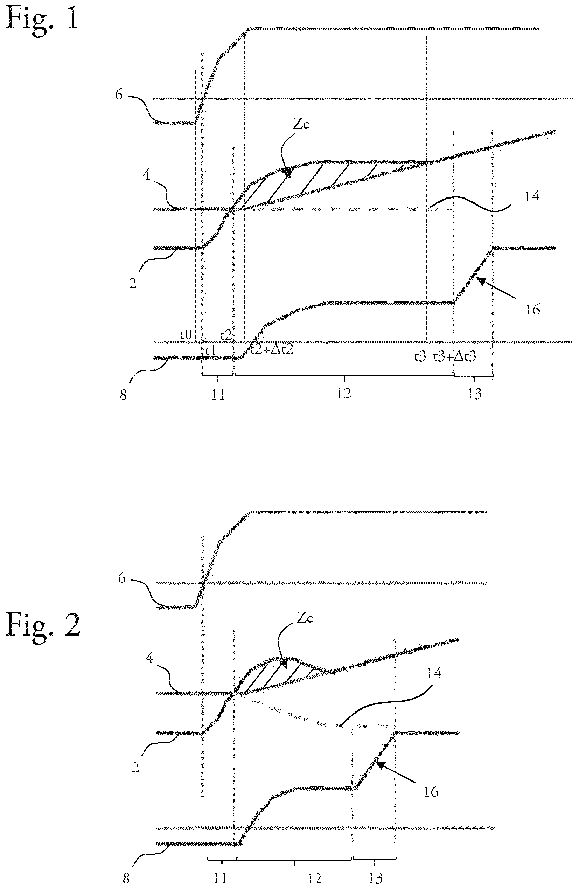

- la figure 1 illustre schématiquement le procédé de contrôle selon l'invention, en rendant visible l'évolution dans le temps de différents paramètres parmi lesquels des valeurs de consigne de couple moteur et de consigne d'embrayage piloté, et des valeurs de régime moteur et de régime d'arbre primaire, et rendant visible en outre une consigne de régime constante ;

- la figure 2 illustre schématiquement un autre procédé de contrôle qui diffère en ce que la consigne de régime présente une valeur décroissante au moins pendant une partie de la phase lors de laquelle elle est utilisée , et qui ne fait donc pas partie de l'invention.

Un organe de couplage d'une chaîne de traction d'un véhicule automobile est disposé entre un moteur thermique et un arbre primaire transmettant la puissance motrice à au moins une roue du véhicule par l'intermédiaire d'une boîte de vitesses pilotée. Le procédé vise à assurer une synchronisation optimisée, c'est-à-dire rapide mais sans-à coups, de l'arbre moteur et de l'arbre primaire.

Les figures illustrent deux modes de réalisation différents du procédé de contrôle d'un organe de couplage piloté qui comportent tous au moins une étape au cours de laquelle on régule l'organe de couplage, c'est-à-dire l'embrayage, en fonction d'une valeur de régime moteur. Plus particulièrement, le procédé de contrôle d'embrayage piloté selon l'invention comporte une pluralité d'étapes, trois dans les exemples illustrés, parmi lesquelles on distingue notamment, car présente quel que soit le mode de réalisation, une phase de régulation de l'embrayage en fonction du régime moteur et d'une consigne de régime qui commence dès lors que le régime moteur présente une valeur au moins égale à la valeur de régime d'arbre primaire.

En d'autres termes, préalablement à cette phase, qui va être décrite plus en détails ci-après, on peut prévoir une première phase au cours de laquelle l'embrayage est maintenu ouvert et au cours de laquelle on laisse évoluer le régime moteur jusqu'à ce que celui-ci atteigne une valeur supérieure à celle du régime de l'arbre primaire.

L'objectif est de tenir compte de l'évolution du régime moteur, par ailleurs évoluant en fonction de la consigne de couple moteur basée sur la demande de couple du conducteur, pour générer une valeur de couple d'embrayage, l'embrayage n'étant engagé qu'après que le régime moteur présente une valeur supérieure à celle du régime d'arbre primaire afin notamment de ne pas générer d'à-coups.

La figure 1 illustre un premier mode de réalisation du procédé. Sont représentées les évolutions au cours du temps de quatre paramètres que sont le régime moteur 2, le régime d'arbre primaire 4, la consigne de couple moteur 6 illustrant la demande de couple du conducteur et la consigne de couple d'embrayage 8, et plus particulièrement au cours de trois phases successives 11, 12, 13.

Avant le déclenchement du procédé selon l'invention, et tel que cela est visible à gauche de la figure 1, l'embrayage est ouvert, la consigne de couple moteur 6 est négative et le régime moteur 2 correspondant est quelconque : selon l'état du véhicule, en décollage ou en roulage, le régime moteur 2 présente une valeur plus basse ou plus haute que celle du régime arbre primaire 4. Dans l'exemple illustré, sans que cela soit limitatif, le régime moteur 2 présente une valeur plus basse que celle du régime arbre primaire 4.

A l'état initial, c'est-à-dire à l'instant t0, le conducteur demande un couple moteur positif, par exemple par enfoncement de la pédale. Il en résulte une première consigne de couple moteur 6 qui est par défaut appliqué au moteur.

A un instant t1, le régime moteur 2 augmente, en fonction de cette première consigne de couple moteur demandée. L'augmentation du régime moteur 2 se poursuit au cours de cette première phase 11, la sortie de cette première phase étant le respect de la condition

$$Rm \geq \max (Ra, Rr),$$

selon laquelle le régime moteur doit être supérieur à la plus grande valeur parmi le régime d'arbre primaire et un régime minimum calibrable,
avec :

    Rm : régime moteur
    Ra : régime d'arbre primaire
    Rr : régime minimum calibrable.

La première phase 11 a ainsi pour objectif d'amener le régime moteur 2 au-delà du régime arbre primaire 4 et d'un régime minimum calibrable, supérieur ou égal au régime de ralenti. Durant cette première phase, l'embrayage est maintenu ouvert et le régime moteur 2 évolue en fonction de la consigne de couple moteur 6.

Selon une première variante de réalisation de cette première phase 11, la consigne de couple moteur 6 est directement déduite de la demande de couple du conducteur, sans filtre. De la sorte, lorsque le régime moteur est stabilisé, la consigne de couple d'embrayage 8, qui est déterminée en fonction du régime moteur 2, est le reflet de la demande de couple du conducteur, via la consigne de couple moteur 6.

Dans une deuxième variante de réalisation de cette première phase 11, on peut prévoir que la consigne de couple moteur 6 soit régulée, par exemple avec un régulateur proportionnel, de manière à faire converger plus rapidement le régime moteur vers le maximum du régime arbre primaire et du régime minimum calibrable.

La sortie du régulateur proportionnel peut être saturée entre deux valeurs positives parmi lesquelles une valeur inférieure qui permet de garantir une progression suffisante du régime moteur et une valeur supérieure qui permet de limiter la sollicitation du moteur dans cette phase transitoire.

Bien entendu, le déroulement des autres phases est le même quelle que soit la variante de ce premier mode de réalisation, et conformément à ce qui a été précisé précédemment, le procédé selon l'invention est notamment particulier en ce que la consigne de couple d'embrayage 8 est appliquée dans une deuxième phase 12 qui ne commence que lorsque le régime moteur 2, qu'il soit issu d'une consigne de couple moteur 6 régulée ou non par rapport à la demande de couple du conducteur, atteint ou dépasse le régime d'arbre primaire 4 ou le régime minimum calibrable.

Tel que cela a pu être précisé précédemment, le passage de la première phase 11 à la deuxième phase 12 est effectué lorsque le régime moteur 2 atteint une valeur supérieure à celle du régime de l'arbre primaire 4 ou une valeur seuil déterminée et pouvant notamment correspondre à une valeur de régime moteur ralenti.

Dans l'exemple illustré sur la figure 1, la première phase 11 dure de l'instant t1 à l'instant t2, et la deuxième phase 12 commence à cet instant t2.

On comprend que la première phase 11 peut être nulle si le véhicule est dans une phase de décollage, le régime moteur 2 prenant immédiatement une valeur supérieure au régime d'arbre primaire 4.

La deuxième phase 12 consiste à engager l'embrayage progressivement de manière à respecter la consigne de couple d'embrayage 8 qui est déterminée en fonction du régime moteur 2 déterminé à un instant donné et d'une consigne de régime 14 déterminée en fonction de la valeur du régime moteur au début de la deuxième phase 12. En d'autres termes, l'engagement de l'embrayage est commandé de manière à limiter le glissement et à faire converger les régimes moteur et arbre primaire.

Dans l'exemple illustré, la consigne de régime 14 a une valeur fixe déterminée par la valeur que présentait le régime moteur 2 au début de la deuxième phase 12, c'est-à-dire lorsque la valeur de régime moteur 2 est devenue supérieure à celle du régime d'arbre primaire 4 ou supérieure à celle d'une valeur de seuil calibrable.

Tel qu'illustré, le régime moteur 2 continue sa progression en début de la deuxième phase 12 en conséquence de l'évolution de la consigne de couple moteur 6, dans la continuité de la fin de la première phase 11. Selon une caractéristique de l'invention, l'embrayage est alors piloté en fonction du régime moteur 2 et d'une consigne de régime 14. En d'autres termes, et plus particulièrement au cours de cette deuxième phase 12 du procédé, le couple moteur et le régime moteur 2 sont définis par la demande de couple du conducteur tandis que l'embrayage est piloté en fonction de variables de régime et notamment du régime moteur 2.

La consigne de couple d'embrayage 8 est déterminée par l'intermédiaire d'un régulateur, prenant en entrée l'écart entre le régime moteur 2 et la consigne de régime 14.

Ce régulateur permettant de déterminer la consigne de couple d'embrayage 8 peut notamment être un régulateur proportionnel. De la sorte, la relation entre la consigne de couple d'embrayage 8 et le régime moteur 2 se lit comme suit :

$$C_{emb\_cons} = K * (N_{mot} - N_{set\ point})$$

avec :

$C_{emb\_cons}$ =la consigne de couple d'embrayage,
K = un gain,
$N_{mot}$ : le régime moteur,
$N_{set\ point}$ : la consigne de régime.

Le gain K est choisi suffisamment faible pour garantir la stabilité, et suffisamment fort pour limiter le glissement. L'avantage de ce régulateur est qu'il est à la fois simple, facile à régler, et qu'il y a toujours une relation directe entre l'écart de régime et le couple appliqué.

Le gain K peut être variable en fonction du rapport de vitesse engagé. A titre d'exemple, le gain est notamment plus fort lorsque le véhicule est en roulage, et donc plus généralement sur les rapports longs, plutôt qu'en décollage, et donc plus généralement sur les rapports courts.

En variante, on peut prévoir de choisir, pour déterminer la consigne de couple d'embrayage en fonction du régime moteur effectif, un régulateur non totalement linéaire, consistant par exemple en une cartographie donnant une consigne de couple d'embrayage en fonction des valeurs prises par les deux variables que sont le régime moteur et la consigne de régime. La fonction du régulateur non linéaire doit être monotone croissante, et le gain local doit rester compatible avec la stabilité du système.

Dans le mode de réalisation de l'invention illustré sur la figure 1, la consigne de régime 14 est maintenue constante pendant toute la durée de la deuxième phase 12.

Au cours de cette deuxième phase 12, à l'instant t2+Δt2, la valeur de consigne de couple d'embrayage 8 augmente du fait de l'écart grandissant entre le régime moteur 2 et la consigne de régime 14 qui demeure fixe. La fermeture partielle de l'embrayage qui en résulte génère une augmentation du régime d'arbre primaire à partir de cet instant t2+Δt2.

A titre d'exemple, afin de simplifier la lecture de la figure 1, on a représenté au cours de la deuxième phase une consigne de couple moteur 6 stabilisée et un régime moteur 2 correspondant qui prend une valeur constante, notamment pour rendre visible, du fait de l'augmentation continue de la valeur de régime d'arbre primaire 4, le rapprochement de la valeur de ce régime d'arbre primaire par rapport à la valeur de régime moteur. On comprendra que cette illustration est schématique et que le procédé de contrôle selon l'invention reste valable même si la consigne de couple moteur 6 n'est pas stable et/ou que le conducteur change sa demande de couple.

Le procédé de contrôle selon l'invention comporte ici une troisième phase 13 venant à la suite de la deuxième phase 12 lorsque le régime d'arbre primaire 4 prend une valeur équivalente à la valeur du régime moteur 2, et le cas échéant après une confirmation temporelle que cet équilibre des régimes est atteint. Dans l'exemple illustré, il convient de noter que le régime d'arbre primaire 4 prend une valeur équivalente à la valeur du régime moteur 2 à un instant t3 au cours de la deuxième phase, et que la troisième phase 13 commence à un instant t3+∆t3 après cette période de confirmation temporelle.

Au cours de la troisième phase 13, la consigne de couple d'embrayage 8 est amenée vers une valeur de couple d'embrayage dite valeur de couple d'embrayage fermé, par l'intermédiaire d'une rampe 16 initialisée par la valeur de la consigne de couple d'embrayage 8 au moment du passage de la deuxième phase 12 à la troisième phase 13. La valeur de couple d'embrayage fermé est ainsi atteinte alors que, tel que cela est visible sur la figure 1, les régimes moteur et arbre primaire sont synchronisés.

Il résulte de ce qui précède que le procédé de contrôle selon l'invention, s'il comporte principalement une phase de contrôle du couple transmis par l'embrayage en fonction du régime moteur, peut avantageusement comporter trois phases parmi lesquelles :

- une première phase 11 lors de laquelle est procédée une accélération du régime moteur 2 pour dépasser le régime d'arbre primaire 4 ;
- une deuxième phase 12 lors de laquelle on contrôle le glissement et le couple transmis par l'embrayage, dans le but de synchroniser les régimes moteur 2 et arbre primaire 4, sans générer d'à-coups, et en fournissant un couple à la roue cohérent avec la demande de couple du conducteur ;
- une troisième phase 13 lors de laquelle on procède à la fermeture complète de l'embrayage.

Le procédé illustré sur la figure 2, est similaire au mode de réalisation de l'invention en ce qu'il comporte ici chacune de ces trois phases 11, 12, 13, mais diffère de ce qui précède dans la valeur donnée à la consigne de régime 14 lors de la deuxième phase 12 du procédé et donc dans la durée de cette deuxième phase qui en résulte.

La valeur de consigne de régime 14 est abaissée dans une première partie de la deuxième phase 12 pour prendre une valeur inférieure à celle de la consigne de régime 14 au début de la deuxième phase 12.

L'abaissement de la consigne de régime 14, à travers le régulateur proportionnel, génère une baisse, avec un léger décalage temporel, du régime moteur 2, dans les mêmes proportions. La convergence des deux régimes moteur 2 et arbre primaire 4 est de la sorte assurée puisque le régime moteur 2 est ramené à une valeur inférieure tandis que le régime d'arbre primaire 4 continue à monter du fait de la consigne de couple d'embrayage 8 devenue constante par équilibre de la différence $(N_{mot} - N_{set\ point})$ dans la formule restant applicable dans ce deuxième mode de réalisation, à savoir :

$$C_{emb\_cons} = K * (N_{mot} - N_{set\ point}).$$

On comprend que, de la sorte, on facilite la convergence entre les deux régimes et l'on peut ainsi limiter la durée du glissement à l'engagement de l'embrayage. La durée de la deuxième phase 12 est réduite, et l'énergie dissipée dans l'embrayage et l'usure de l'embrayage sont diminuées, tel qu'illustré sur la figures 1 et 2 par la zone zébrée Ze entre le régime d'arbre primaire 4 et le régime moteur 2 au cours de la deuxième phase 12.

La consigne de régime 14 peut être abaissée de différente manière, et notamment de manière régulière. Il est toutefois intéressant de prévoir d'abaisser la consigne de régime 14 avec une pente qui s'adoucit au fur et à mesure du rapprochement des valeurs du régime moteur et du régime d'arbre primaire.

Dans une variante de contrôle d'embrayage non illustrée, permettant de réduire le temps de glissement et la durée de la deuxième phase, on propose de prendre la main sur le couple moteur, étant entendu que conformément à ce qui précède, la consigne de couple d'embrayage est fonction de l'évolution du régime moteur au cours de la deuxième phase. La consigne de couple moteur peut être atténuée, par une cartographie supplémentaire, par rapport à la demande de couple du conducteur.

Cette cartographie supplémentaire peut être calibrée différemment selon les situations ou véhicules. Par exemple, sur un véhicule hybride lors d'une transition depuis le mode électrique vers le mode thermique, une machine électrique peut continuer à fournir du couple dans cette phase. Le fait de réduire le couple moteur permet donc de gagner du temps dans la transition, sans que ce soit gênant pour le moteur. Dans un autre type d'utilisation, par exemple en sortie de mode en roue libre, il est préférable de respecter au mieux la demande de couple du conducteur, de telle sorte que le couple moteur pourra être faiblement atténué. A titre d'exemple, dans cette variante avec atténuation du couple moteur, il faut, qu'au cours de la troisième phase, la consigne de couple moteur soit ramenée au niveau de la demande de couple du conducteur, par exemple sous forme de rampe. De la sorte, pour garantir qu'il n'y ait pas à nouveau du glissement, la consigne de couple moteur est maintenue à une valeur strictement inférieure à la valeur de la consigne de couple embrayage.

L'invention telle qu'elle vient d'être décrite atteint bien les buts qu'elle s'est fixés, en ce qu'elle permet, par un procédé de contrôle simple à mettre en œuvre, de piloter un organe de couplage entre moteur et boite de vitesses et de proposer une stratégie de contrôle de cet organe de couplage permettant de passer d'une situation « chaîne de traction ouverte » à une situation « chaine de traction fermée », lorsque le conducteur fait une demande de couple positive à la pédale, et ce avec un bon agrément.

Les avantages de ce procédé sont nombreux, parmi lesquels l'obtention d'un couple à la roue cohérent avec la demande de couple du conducteur, un glissement maitrisé et une convergence garantie, peu sensible aux incertitudes sur le coefficient de frottement de l'embrayage. L'engagement de l'embrayage se fait sans à-coups, et ne nécessite pas d'informations du type accélération moteur ou arbre primaire, qui sont des grandeurs souvent difficiles à obtenir non bruitées et non déphasées.

## Revendications

1. Procédé de contrôle d'un embrayage piloté au cours duquel une consigne de couple moteur (6) est basée sur une demande de couple du conducteur et au cours duquel on régule l'embrayage en fonction de la variation de régime moteur (2) qui découle de cette consigne de couple moteur (6), et au cours duquel on ne commence à engager l'embrayage qu'après que le régime moteur (2) présente une valeur supérieure à celle d'un régime d'arbre primaire (4) ou supérieure à une valeur seuil prédéterminée, le procédé comportant au moins :

   - une première phase (11) au cours de laquelle l'embrayage est maintenu ouvert et au cours de laquelle le régime moteur (2) est amené à une valeur supérieure à celle du régime de l'arbre primaire (4) ou à une valeur seuil ;
   - une deuxième phase (12) qui démarre dès que la valeur du régime moteur (2) est au moins égale à la valeur du régime d'arbre primaire (4) ou à ladite valeur seuil prédéterminée, au cours de laquelle une consigne de couple d'embrayage (8) est déterminée en fonction du régime moteur (2) et d'une consigne de régime (14), la consigne de régime (14) prenant la valeur du régime moteur au début de cette deuxième phase. **caractérisé en ce que** la consigne de régime (14) est maintenue constante pendant toute la durée de la deuxième phase (12).

2. Procédé de contrôle selon la revendication précédente, **caractérisé en ce que** la consigne de couple d'embrayage (8) est déterminée par l'intermédiaire d'une cartographie.

3. Procédé de contrôle selon la revendication 1, **caractérisé en ce que** la consigne de couple d'embrayage (8) est déterminée par l'intermédiaire d'un régulateur, prenant en entrée l'écart entre le régime moteur (2) et la consigne de régime (14).

4. Procédé de contrôle selon la revendication précédente, **caractérisé en ce que** le régulateur permettant de déterminer la consigne de couple d'embrayage (8) est un régulateur proportionnel.

5. Procédé de contrôle selon la revendication précédente, **caractérisé en ce que** le régulateur est paramétré de sorte que :

$$C_{emb\_cons} = K * (N_{mot} - N_{set\ point})$$

avec :

   $C_{emb\_cons}$=la consigne de couple d'embrayage,
   K = un gain,
   $N_{mot}$ : le régime moteur,
   $N_{set\ point}$ : la consigne de régime.

6. Procédé de contrôle selon l'une des revendications précédentes, **caractérisé en ce que** la consigne de couple moteur (6) est atténuée par rapport à la demande de couple du conducteur.

7. Procédé de contrôle selon la revendication précédente, **caractérisé en ce que** la consigne de couple moteur (6) est atténuée en fonction du cas d'utilisation du véhicule.

8. Procédé de contrôle selon la revendication précédente, **caractérisé en ce que**, au cours de la première phase, la consigne de couple moteur (6) est établie à partir d'un régulateur.

9. Procédé de contrôle selon l'une des revendications précédentes, **caractérisé en ce que** la deuxième phase (12) est suivie d'une troisième phase (13) lorsque la valeur de régime d'arbre primaire (4) est égale à celle du régime moteur (2).

10. Procédé de contrôle selon la revendication précédente, **caractérisé en ce qu'**au cours de la troisième phase (13), au moins la consigne de couple d'embrayage (8) est modifiée pour prendre une valeur de consigne de couple d'embrayage dite valeur de couple d'embrayage fermé.

11. Procédé de contrôle selon la revendication précédente, **caractérisé en ce que** la consigne de couple moteur (6) est augmentée au cours de la troisième phase (13) dès lors que la consigne de couple d'embrayage (8) présente une valeur strictement supérieure à celle de la consigne de couple moteur (6).

## Patentansprüche

1. Verfahren zur Steuerung einer automatischen Kupplung, während dessen ein Motordrehmomentsollwert (6) auf einer Drehmomentanforderung des Fahrers basiert und während dessen die Kupplung in Abhängigkeit von der Veränderung einer Motordrehzahl (2) geregelt wird, die sich aus diesem Motordrehmomentsollwert (6) ergibt, und während dessen die Kupplung erst dann eingerückt wird, wenn die Motordrehzahl (2) einen Wert aufweist, der größer als der Wert einer Drehzahl einer Primärwelle (4) oder größer als ein vorgegebener Schwellenwert ist, wobei das Verfahren mindestens Folgendes umfasst:

   - eine erste Phase (11), während der die Kupplung offen gehalten wird und während der die Motordrehzahl (2) auf einen Wert gebracht wird, der größer als der Wert der Drehzahl der Primärwelle (4) oder als ein Schwellenwert ist;
   - eine zweite Phase (12), die startet, sobald der Wert der Motordrehzahl (2) mindestens gleich dem Wert der Drehzahl der Primärwelle (4) oder dem vorgegebenen Schwellenwert ist, während der ein Kupplungsdrehmomentsollwert (8) in Abhängigkeit von der Motordrehzahl (2) und einem Drehzahlsollwert (14) bestimmt wird, wobei der Drehzahlsollwert (14) den Wert der Motordrehzahl zu Beginn dieser zweiten Phase annimmt, **dadurch gekennzeichnet, dass** der Drehzahlsollwert (14) während der gesamten Dauer der zweiten Phase (12) konstant gehalten wird.

2. Steuerungsverfahren nach dem vorhergehenden Anspruch, **dadurch gekennzeichnet, dass** der Kupplungsdrehmomentsollwert (8) mit Hilfe einer Kartographie bestimmt wird.

3. Steuerungsverfahren nach Anspruch 1, **dadurch gekennzeichnet, dass** der Kupplungsdrehmomentsollwert (8) mit Hilfe eines Reglers bestimmt wird, der als Eingang den Abstand zwischen der Motordrehzahl (2) und dem Drehzahlsollwert (14) annimmt.

4. Steuerungsverfahren nach dem vorhergehenden Anspruch, **dadurch gekennzeichnet, dass** der Regler, der die Bestimmung des Kupplungsdrehmomentsollwerts (8) ermöglicht, ein Proportionalregler ist.

5. Steuerungsverfahren nach dem vorhergehenden Anspruch, **dadurch gekennzeichnet, dass** der Regler so parametriert ist, dass:

$$C_{emb\ cons} = K\ *\ (N_{mot}\ -\ N_{set\ point})$$

wobei:

$C_{emb\_cons}$ = der Kupplungsdrehmomentsollwert ist,
K = ein Verstärkungsfaktor ist,
$N_{mot}$: die Motordrehzahl ist,
$N_{set\ point}$: der Drehzahlsollwert ist.

6. Steuerungsverfahren nach einem der vorhergehenden Ansprüche, **dadurch gekennzeichnet, dass** der Motordrehmomentsollwert (6) in Bezug auf die Drehmomentanforderung der Fahrers abgeschwächt wird.

7. Steuerungsverfahren nach dem vorhergehenden Anspruch, **dadurch gekennzeichnet, dass** der Motordrehmomentsollwert (6) in Abhängigkeit von dem Anwendungsfall des Fahrzeugs abgeschwächt wird.

8. Steuerungsverfahren nach dem vorhergehenden Anspruch, **dadurch gekennzeichnet, dass** während der ersten Phase der Motordrehmomentsollwert (6) über einen Regler festgelegt wird.

9. Steuerungsverfahren nach einem der vorhergehenden Ansprüche, **dadurch gekennzeichnet, dass** auf die zweite Phase (12) eine dritte Phase (13) folgt, wenn der Wert der Drehzahl der Primärwelle (4) gleich dem Wert der Motordrehzahl (2) ist.

10. Steuerungsverfahren nach dem vorhergehenden Anspruch, **dadurch gekennzeichnet, dass** während der dritten Phase (13) mindestens der Kupplungsdrehmomentsollwert (8) modifiziert wird, um einen Wert eines Kupplungsdrehmomentsollwerts anzunehmen, der als Drehmomentwert bei geschlossener Kupplung bezeichnet wird.

11. Steuerungsverfahren nach dem vorhergehenden Anspruch, **dadurch gekennzeichnet, dass** der Motordrehmomentsollwert (6) während der dritten Phase (13) erhöht wird, sobald der Kupplungsdrehmomentsollwert (8) einen Wert aufweist, der in jedem Fall größer als der Wert des Motordrehmomentsollwerts (6) ist.

## Claims

1. Method for controlling an automated clutch during which an engine torque setpoint (6) is based on a demand for torque from the driver and during which the clutch is regulated as a function of the variation in engine speed (2) resulting from this engine torque setpoint (6), and during which clutch engagement does not begin until after the engine speed (2) has reached a value higher than that of a speed of a primary shaft (4) or higher than a predetermined threshold value,
the method comprising at least:

- a first phase (11) during which the clutch is kept open and during which the engine speed (2) is brought to a value higher than that of the speed of the primary shaft (4) or than a threshold value;
- a second phase (12) which begins as soon as the value of the engine speed (2) is at least equal to the value of the speed of the primary shaft (4) or to said predetermined threshold value, during which phase a clutch torque setpoint (8) is determined as a function of the engine speed (2) and of a speed setpoint (14), the speed setpoint (14) adopting the value of the engine speed at the start of this second phase,

**characterized in that** the speed setpoint (14) is kept constant throughout the entire duration of the second phase (12).

2. Control method according to the preceding claim, **characterized in that** the clutch torque setpoint (8) is determined using a map.

3. Control method according to Claim 1, **characterized in that** the clutch torque setpoint (8) is determined by means of a regulator which at input considers the discrepancy between the engine speed (2) and the speed setpoint (14).

4. Control method according to the preceding claim, **characterized in that** the regulator which allows the clutch torque setpoint (8) to be determined, is a proportional regulator.

5. Control method according to the preceding claim, **characterized in that** the regulator is parametrized such that:

$$C_{emb\_cons} = K * (N_{mot} - N_{set\ point})$$

where:

$C_{emb\_cons}$ = the clutch torque setpoint,
K = a gain,
$N_{mot}$ = the engine speed,
$N_{set\ point}$ = the speed setpoint.

6. Control method according to one of the preceding claims, **characterized in that** the engine torque setpoint (6) is attenuated with respect to the demand for torque from the driver.

7. Control method according to the preceding claim, **characterized in that** the engine torque setpoint (6) is attenuated as a function of the type of use of the vehicle.

8. Control method according to the preceding claim, **characterized in that** during the first phase, the engine torque setpoint (6) is established using a regulator.

9. Control method according to one of the preceding claims, **characterized in that** the second phase (12) is followed by a third phase (13) when the value of the speed of the primary shaft (4) is equal to that of the engine speed (2).

10. Control method according to the preceding claim, **characterized in that** during the third phase (13), at least the clutch torque setpoint (8) is modified to adopt a clutch torque setpoint value referred to as the closed clutch torque value.

11. Control method according to the preceding claim, **characterized in that** the engine torque setpoint (6) is increased during the third phase (13) as soon as the clutch torque setpoint (8) exhibits a value strictly higher than that of the engine torque setpoint (6).

Fig. 1

Fig. 2

## RÉFÉRENCES CITÉES DANS LA DESCRIPTION

**Documents brevets cités dans la description**

- FR 2920501
- DE 102016218289 A1
- FR 2927964 A1
- FR 2802482 A1